(19) Europäisches Patentamt
European Patent Office
Office européen des brevets

(11) **EP 4 310 793 A1**

(12) **EUROPEAN PATENT APPLICATION**

(43) Date of publication:
**24.01.2024  Bulletin 2024/04**

(21) Application number: **22382707.2**

(22) Date of filing: **22.07.2022**

(51) International Patent Classification (IPC):
**G06V 10/77** *(2022.01)*          **G06V 10/774** *(2022.01)*
**G06N 10/60** *(2022.01)*          **G06V 10/20** *(2022.01)*

(52) Cooperative Patent Classification (CPC):
**G06V 10/77; G06N 10/60; G06N 20/10;
G06V 10/20; G06V 10/7747**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Multiverse Computing S.L.
20014 Donostia / San Sebastián (ES)**

(72) Inventors:
• **García Guijo, Daniel**
  **20014 Donostia / San Sebastián (ES)**
• **Onofre, Victor**
  **20014 Donostia / San Sebastián (ES)**
• **Orús, Román**
  **20014 Donostia / San Sebastián (ES)**

(74) Representative: **Harrison, Robert John
Sonnenberg Harrison Partnerschaft mbB
Herzogspitalstraße 10a
80331 München (DE)**

(54) **QUANTUM METHOD AND SYSTEM FOR CLASSIFYING IMAGES**

(57)      A computer-implemented method of classifying an image using a quantum trained vision system is disclosed. The method comprises enhancing contrast of the image and applying dimension reduction to the contrast-enhance image. The enhanced contrast and dimensionally reduced image is passed to a quantum trained vision system and a result is generated from the quantum trained vision system. The result could be a simply yes/no or true/false binary result to see whether the image fell into one of several predefined classes. Alternatively, the result could be an indication of an object in the image.

Fig. 2

**Description**

Cross Reference to related applications

None

Background to the Invention

Artificial vision systems are used in a wide variety of fields for the detection of defects in products. Prior art solutions are known with several approaches to the artificial vision system. One of the most modern prior art solutions uses artificial intelligence (AI) methods for artificial vision to detect the defects. Classical approaches for computer vision are dominated by the use of deep convolutional neural networks (CNN) which, due to the vast number of parameters used, essentially act as black boxes, and require high inference times caused by the number of operations needed for, e.g., just a single forward pass.

Prior Art

A number of patent documents are known in which classification of images is discussed. For example, European Patent Application EP 3 674 999 (Bull) teaches a method of classification of images among different classes comprising: performing a dimensionality reduction step for said different classes on a training set of images whose classes are known, and then classifying one or more unknown images among said different classes with reduced dimensionality. The dimensionality reduction step is performed on the training set of images by machine learning including processing.

International Patent Application WO 2019/238510 A1 (IBM) teaches a system with a processor that executes computer executable components stored in a memory; a quantum feature map circuit component that estimates a kernel associated with a feature map; and a support vector machine component that performs a classification using the estimated kernel.

US Patent Application No US 2022/121998 A1 (Google) also teaches kernel methods for machine learning that can be applied to a variety of regression and classification problems using a quantum computing device to compute the kernel function.

Finally, US Patent No US 10,977,558 B2 teaches a generic quantum machine learning approach for training image classifiers. The quantum machine does not require manual interaction for downsizing, binarization or feature selection. It works on large greyscale and RGB images. A classical compression of the image data (e.g., an auto-encoder trained to compress the image data) may be used to compress the data to a size that can be loaded on to the quantum computer.

One of the challenges with the classification of images is the size of the stored images. For example, even in a black and white image every pixel will take a value between 0 and 255 (for an 8-bit grey scale) which means that the amount of data that needs to be processed will be exceedingly high and the processing times can be long. A colour image, using for example, an RGB coding scheme will require three times as much data as well.

Another challenge is the identification of features in the images which have a low contrast.

Summary of the Invention

This application discloses a system and method for a quantum vision system using the capabilities of noisy intermediate-scale quantum (NISQ) hardware in the context of quantum machine learning (QML) techniques, without excluding the use of quantum-inspired algorithms as well as hybrid approaches.

This document teaches a computer-implemented method of classifying an image using a quantum trained vision system. The method comprises enhancing contrast of the image and applying dimension reduction to the contrast-enhance image. The enhanced contrast and dimensionally reduced image is passed to a quantum trained vision system and a result is generated from the quantum trained vision system. The result could be a simply yes/no or true/false binary result to see whether the image fell into one of several predefined classes. Alternatively, the result could be an indication of an object in the image.

The use of the contrast enhancement enables even small feature, otherwise unrecognisable to the naked eye, to be identified. The use of the dimension reduction enables a reduction in the amount of storage space and improved processing times. In one aspect, ten or twenty dimensions can be used.

The enhancing of the image comprises one of contrast stretching or histogram equalisation. It would be also possible to only enhance a part of the image.

In one aspect, the enhanced contrast and dimensionally reduced image can be split into at least two parts depending on the received result. This could happen if the result indicates that the image includes a specified object, but the location of the specified object is not clear in the image. The at least two parts of the enhanced contrast and dimensionally reduced image can then be passed to the quantum-trained classifier module and a further result is received from each of the parts. It is probable that only one of the parts of the image will contain the specified object and so its location within the image can be further identified. This process can be repeated to narrow down the location of the specified object.

The training of a classifier module to classify a plurality of images is conducted as follow. A set of training images is selected. This selection can be from a publicly available set of images or a proprietary set of images. The images in the set of training images are annotated with one or more annotations. This annotation can be supplied in the publicly available set of images or can be conducted separately. In a next step, the contrast of the images is enhanced, and a dimension reduction applied to the contrast-enhanced images. The enhanced contrast and dimensionally reduced image and the annotations are passed to a quantum-inspired classifier module to develop a vision system from the enhanced contrast and dimensionally reduced image and the annotations. The vision system is then used to classify the unknown images.

This document also teaches a system for the classification of images comprising a central processing unit, which is typically a classical processor, data storage, a plurality of input/output devices for inputting the images, an image pre-processing module adapted to enhance contrast of the image and reduce the dimensions of the image, and a quantum-trained vision system for accepting the enhanced contrast and dimensionally reduced image and generating a result.

The image pre-processing module is adapted to enhance the contrast of the image by one of contrast stretching or histogram equalisation and can also reduce the number of dimensions of the image using principal component analysis.

Description of the Figures

Fig. 1 shows an overview of a quantum computing system according to one aspect of the invention.

Fig. 2 shows an overview of a system for implementing the method.

Fig. 3 shows a method of classifying the images.

Fig. 4 shows a method of quantum training a vision system model.

Detailed description of the invention

The invention will now be described on the basis of the drawings. It will be understood that the embodiments and aspects of the invention described herein are only examples and do not limit the protective scope of the claims in any way. The invention is defined by the claims and their equivalents. It will be understood that features of one aspect or embodiment of the invention can be combined with a feature of a different aspect or aspects and/or embodiments of the invention.

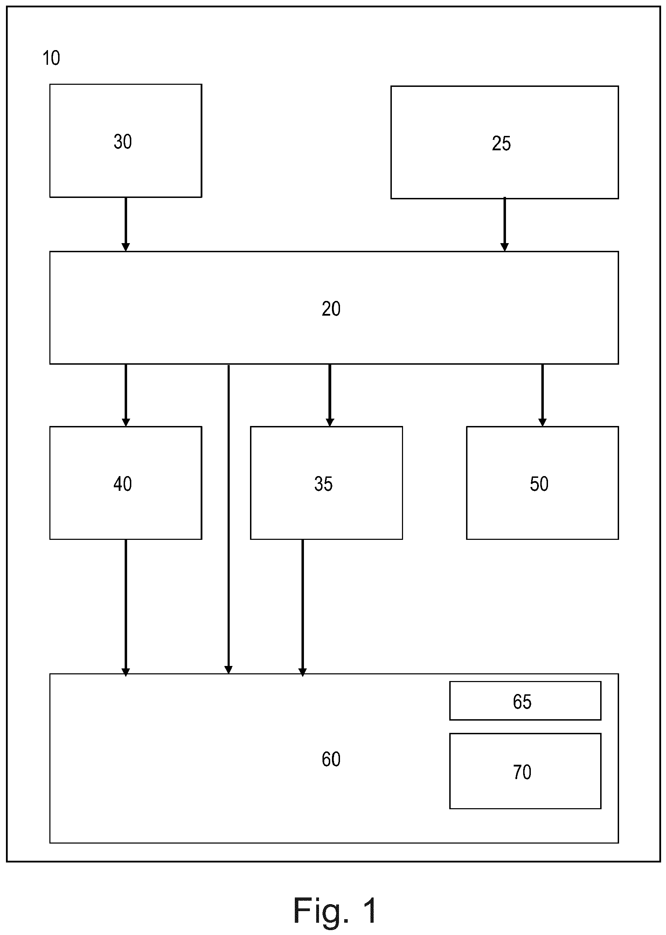

Fig. 1 shows an overview of a computing system 10 for implementing the method of this document. The computing system 10 is, for example, a hybrid quantum and classical system and comprises, in an example, a central processing unit 20 which is connected to a data storage unit 25 (i.e., one or more memory devices), and a plurality of input/output devices 30. The input/output devices 30 enable input of one or more images and an output of a result for the one or more of the images.

A graphics processing unit 35 for processing vector calculations and a field programmable gate array (FGPA) 40 for control logic can also be connected to the central processing unit 20. A quantum processor 50 (also termed quantum accelerator) is connected to the central processing unit 20. In an alternative embodiment, the quantum processor 50 is emulated on a classical processor.

In one implementation of the computing system 10, the quantum processor 50 can be a quantum annealing system, such as one supplied by D-Wave, but this is not limiting of the invention. A gate-based quantum processor can also be used. The computing system 10 is connected to a computer network 60, such as the Internet. It will be appreciated that the computing system 10 of Fig. 1 is merely exemplary and other units or elements may be present in the computing system 10. It will also be appreciated that there may be many input/output (I/O) devices 30 located at multiple locations and that there may be a plurality of data storage units 25 also located at multiple locations. The many I/O devices and data storage units 25 are connected by the computer network 60.

The computer network 60 is accessed by a large number of devices 70 which can include cameras for producing images, as well as personal computers, smartphones and/or tablets.

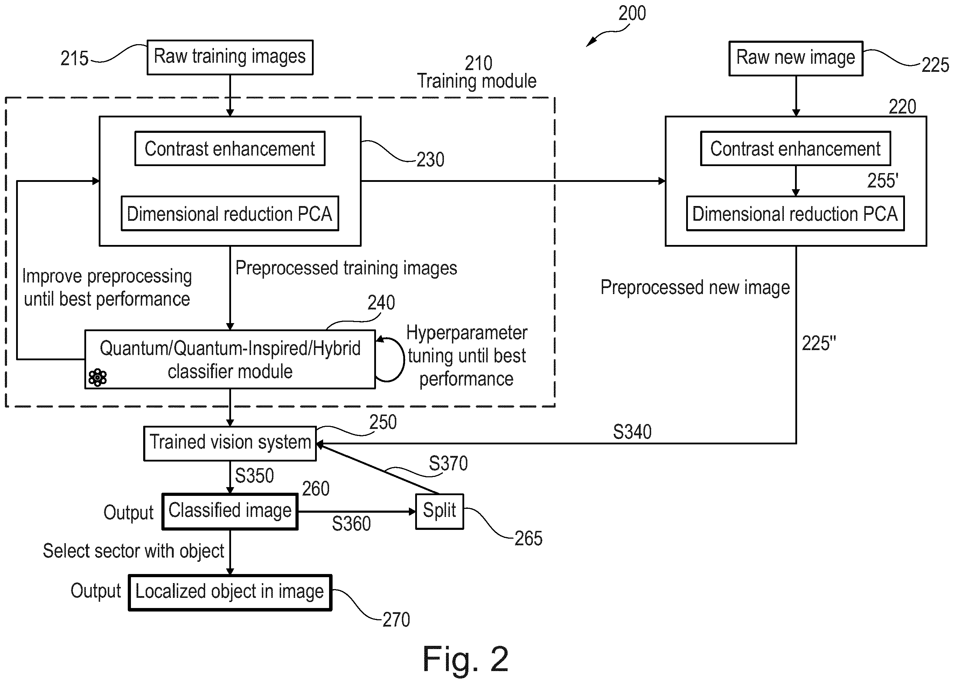

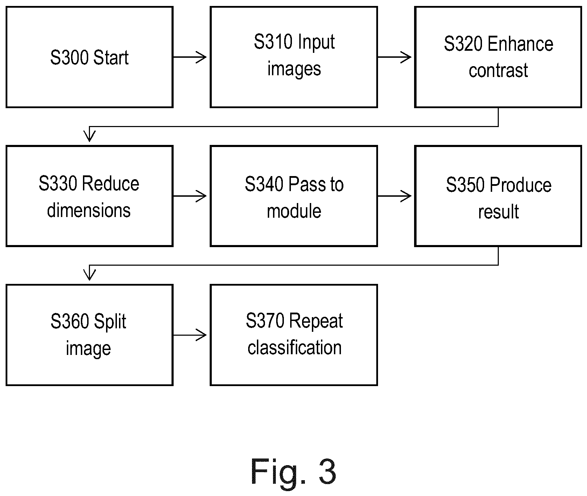

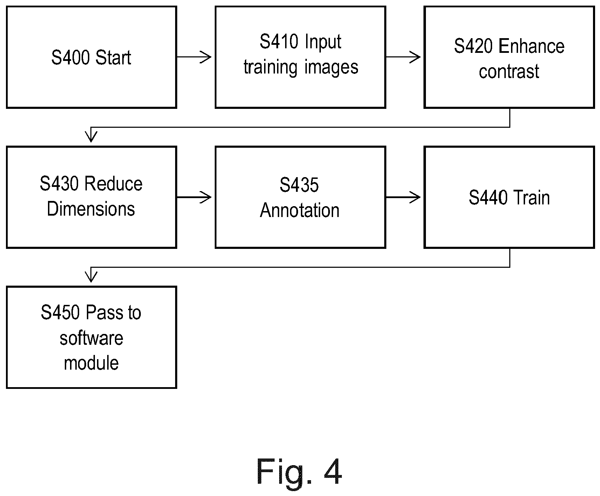

The system 200 for the classification of images is outlined in Fig. 2 and comprises several modules. Fig. 2 shows a training module 210 and a processing module 220. The function of these modules which are explained later. The method for using the system is outlined in Fig. 3 and the method for generating a model using machine learning techniques is outlined in Fig. 4.

The training method for generating the model will now be explained. The method starts in step S400. A training dataset 215 of a plurality of training images 215 is input in step S410 into the training module 210. The training dataset can be either a publicly available image dataset or an image dataset generated for the specific application. After training, the model developed by the training module 210 will be able to recognise images and patterns in the training dataset 215 and can then be passed to the trained vision system 250 to recognise images and patterns in new, raw images 225. The training dataset 215 is used to train a quantum (or quantum-inspired) machine learning algorithm stored as a model in a classifier module 240 to recognise the images and patterns in the images from the training dataset 215.

It will be appreciated that many the images of both of the training dataset 215 and the new, raw images 225 may be of enormous size and may have low contrast. In particular, the low contrast may make it difficult to recognise certain patterns in the images, such as defects in a manufactured product. These low-contrast objects/patterns/defects are hard to locate in the images, even for a human eye. The training module 210 includes an image pre-processing module 230. The function of the image pre-processing module 230 is to enhance the contrast of the image in step S420 and reduce the number of dimensions in step S430.

There are several techniques used to enhance the contrast of an image in step S420 and these techniques will now be discussed.

Contrast stretching (often called *normalization)* is a simple image enhancement technique that attempts to improve the contrast in the image by "stretching" the range of intensity values of the pixels in the image so that the value of the pixels in the image spans a desired range of values, e.g., a full range of pixel values allowed by a type of the image. The contrast stretching technique differs from more sophisticated histogram equalization in that the contrast stretching technique can only apply a linear scaling function to the pixel values in the image. The resulting "enhancement" of the image is therefore less harsh.

It is necessary to specify limits for the upper pixel values and lower pixel values over which the image is to be normalized before commencing the contrast stretching technique. The limits will often be the minimum and maximum pixel values. For example, for 8-bit grey level images, the lower and upper limits might be 0 and 255. In one aspect, the limits were chosen to be the *2nd* and 98th percentiles.

The contrast stretching technique can be represented mathematically as a flow. Let us suppose that the lower limit and the upper limit for the pixel values are *a* and *b,* respectively. The simplest sort of normalization then scans the image to find the lowest pixel values and the highest pixel values currently present in the image. Call these c and d. Then each pixel P in the image is scaled using the following function:

$$P_{out} = (P_{in} - c)\left(\frac{b-a}{d-c}\right) + a$$

$P_{out}$ is the stretched value of the pixel and $P_{in}$ is input value of the pixel.

Another method of image contrast enhancement is histogram equalization. This method involves increasing the intensity range of the image and the method effectively spreads out the range of intensities. The method thereby improves the visibility of low contrast features.

Let *f* be an image represented as an *mr* by *mc* matrix of integer pixel intensities ranging from 0 to *L*-1*. L* is the number of possible intensity values which is, for example, 256 but this is not limiting of the invention. *Let p* denote the normalized histogram of *f* with a bin for each possible intensity. So

$$p_n = \frac{numbe\ of\ pixels\ with\ intensiv\ n}{total\ number\ of\ pixels}$$

where *n= 0,1,2, ..., L-1*

The histogram equalized image g will be defined by

$$g_{i,j} = floor\left((L-1)\sum_{n=0}^{f_{i,j}} p_n\right)$$

where *floor()* rounds down to the nearest integer from below.
This is equivalent to transforming the pixel intensities, k, of f by the function

$$T(k) = floor\left((L-1)\sum_{n=0}^{k}p_n\right)$$

A further method of image contrast enhancement is adaptive equalisation. This technique is similar to histogram equalization and applies the exact same transformation. However, instead of transforming the image as a whole, the method does so by modifying different histograms. These histograms correspond to different areas of the image and thus effectively applies this enhancement in those areas of the image where the enhancement is most needed.

The small number of qubits available on the current gate-based quantum processors 50 means that it is necessary to reduce the dimension of the data if one chooses to train a quantum machine learning algorithm on the quantum processor 50 with few qubits.

One method of reducing the dimensionality of the data is principal component analysis (PCA) in a dimension reduction module and this is conducted in step S430. PCA is a dimensionality reduction technique which allows the simplification the complexity of spaces with a high number of dimensions while preserving a significant amount of information. These principal components are obtained by finding the vectors in which direction the variance of the data is maximum, that is, the *eigenvectors.* Once the first principal component has been found, the next principal component should be orthogonal to the first principal component to ensure linear independence between the principal components. This second component would correspond to the direction, orthogonal to the first one, with the second highest variance. This corresponds to the eigenvector with the second highest *eigenvalue* (i.e., length). This process is repeated iteratively to obtain the rest of the principal components. The number of the principal components is restricted by the capability of the processor.

The number of dimensions chose will be dependent on the requirements. In one non-limiting example ten dimensions were chosen as this number of dimensions could be handled by the quantum processor 50 (or emulation of the quantum processor). The greater the number of dimensions chosen, the greater amount of information retained. There will therefore be a trade-off between the number of dimensions, the accuracy of the image classification and the speed of processing.

The idea next is to use the pre-processed (i.e., contrast-enhanced and reduced dimension) images in a classifier module 240 to train a machine learning algorithm, for image or pattern identification, in step 440. The algorithm can be of one of three kinds:

1. A quantum algorithm, running exclusively on the quantum processor 50.
2. A quantum-inspired (QI) algorithm, running exclusively on classical hardware, such as the central processing unit 20, the graphics processing unit 35 and/or the field programmable gate array 40 (i.e., without the quantum processor 50 of Fig. 1).
3. A hybrid quantum-QI algorithm, running both on classical hardware and the quantum processor 50.

The options for a quantum algorithm could be, non-exclusively, a quantum-boost algorithm running on a quantum annealer, a quantum support vector machine running on a gate-based universal quantum computer, or a variational quantum classifier running on a gate-based universal quantum computer. Examples of quantum annealers could use, non-exclusively, superconducting qubits, whereas examples of universal gate-based quantum computers could use, non-exclusively, superconducting qubits, neutral atoms, trapped ions, and photonic systems. These options for a quantum-inspired algorithm could include, but are not limited to, a Tensor Network Boost algorithm on classical hardware (CPU/GPU/FPGA), a Tensor Network support vector machine on classical hardware as well, or a Tensor Neural Network again on classical hardware. These Tensor Networks could use, non-exclusively, structures such as Matrix Product States, Projected Entangled Pair States, Tree Tensor Networks, and/or Multi-scale Entanglement Renormalization Ansatz.

The options for a hybrid quantum-QI algorithm could be any of the algorithms for QI described above, but where linear algebra operations such as matrix multiplication and singular value decomposition are implemented on the quantum processors 50 to enhance performance.

It will be appreciated that the images will need to be annotated and this can be done in step S435. The annotation may have been conducted at an earlier stage. For example, the images in open-source datasets may already be partly annotated. The model developed from the training of the system in step S440 is passed in step S450 to a software module enabling the trained vision system 250. The trained vision system 250 can be used accept new images 225 and, after image contrast enhancement and dimensional reduction in the image pre-processing module 230, to classify the new images as will be described with respect to Fig. 3.

The trained vision system 250 can recognize images or patterns in images. As already outlined above, the raw images 225 to be classified/recognized go through the same data pre-processing as the training images and the algorithm in the trained vision system 250 classifies these raw new images 255. This is described in Fig. 3 which starts the classification algorithm at step S300. The one or more raw images 225 to be classified are input in step S310 and are contrast-enhanced in step S320. It will be appreciated that the same method of contrast enhancement should be use in step S320 as in the training set S420.

The dimensions of the contrast-enhanced images 225'are reduced in dimensions in step S330 to the same dimensions as in step S430 to produce pre-processed images 225".

The pre-processed images 225"are passed in step S340 to the trained vision system 250 and a result 260 produced in step S350. The results 260 from the trained vision system 250 depend on the function of the vision system 250. For example, the aim of the trained vision system 250 could be to classify the images (e.g., cats/dogs/frogs etc) and the result would be an output of the classified image.

Another aim would be to recognise objects within the image, and in this case, the classifier is trained to recognise the particular object (resulting in a yes/no response). If the result 260 is "yes", then a classical processing could split in step S360 the image in, e.g., two areas (non-exclusively) 265 and re-runs in step 370 the classification for both areas of the image, to determine in which one of the split areas the object is to be found (getting a "yes" in the classifier). This method is iterated until sufficient precision in the localisation 270 of the object is found in one of the areas, and/or until the classifier is unable to dive deeper in the image due to e.g., small number of pixels. The result is the localised object in the image.

Results

Numerical experiments with quantum hardware show that the approach described in this document produces enhanced precision with respect to classical algorithms.

In a first experiment, X-ray images from non-destructive testing from the publicly available GDXray databases in GitHub were used as the training set 215. The GDXray dataset comprise five separate groups of images, of which only the first group of images has been used. This group, called "Castings", contains 67 series with a total of 2727 images of automotive parts with and without casting defects, and annotations of the bounding boxes of these defects.

The images were reviewed and labelled (or annotated) in step S435 as "with defect" or "without defect" to establish a ground truth. The labelling was done using a custom-made program written in *Python* and based on the existence of bounding box annotations for each of the images. The goal is then to train a supervised classification system that can *see* whether an image as a defect or not. Dimensionality reduction was also used in the case of the quantum-SVM. The results are given below.

Experiment 1

| Model | Precision | Recall | F1 |
| --- | --- | --- | --- |
| Linear SVM | 0.81 | 0.28 | 0.41 |
| Non-Linear SVM | 0.87 | 0.57 | 0.69 |
| AdaBoost(10 trees) | 0.71 | 0.68 | 0.70 |
| AdaBoost (50 trees) | 0.76 | 0.84 | 0.80 |
| QSVM (simulated) | 0.88 | 0.96 | 0.92 |
| QBoost (9/10 trees, exhaustive) | 0.89 | 0.90 | 0.90 |
| QBoost (9/10 trees, D-Wave) | 0.89 | 0.90 | 0.90 |

The above results used PCA to reduce the dimension of the data to 10 features. Best classifier is the QSVNM (simulated). The term "exhaustive" in QBoost means that all of the paths were investigated using a quantum simulator running on a classical machine to identify the best solution for the QBoost cost function.

Experiment 2

| Model | Precision | Recall | F1 |
|---|---|---|---|
| Linear SVM | 0.71 | 0.34 | 0.46 |
| Non-Linear SVM | 0.90 | 0.56 | 0.69 |
| #AdaBoost (10 trees) | 0.85 | 0.75 | 0.80 |
| AdaBoost (50 trees) | 0.76 | 0.73 | 0.74 |
| QSVM (16 qubits, simulated) | 0.87 | 0.96 | 0.91 |
| QBoost (7/10 trees, exhaustive) | 0.85 | 0.95 | 0.89 |
| QBoost (7/10 trees, D-Wave) | 0.85 | 0.95 | 0.89 |

In this second experiment, the results used PCA to reduce the dimension of the data to 20 features. Best classifier is the QSVM (16 qubits, simulated).

Experiment 3

| Model | Precision | Recall | F1 | Running Time (minutes) |
|---|---|---|---|---|
| Linear SVM | 0.73 | 0.77 | 0.75 | 4.5 |
| Non-Linear SVM | 0.91 | 0.54 | 0.68 | 12.5 |
| AdaBoost (10 trees) | 0.82 | 0.83 | 0.83 | 6.2 |
| AdaBoost (50 trees) | 0.82 | 0.81 | 0.81 | 49.0 |
| QBoost (9/10 trees, exhaustive) | 0.90 | 0.95 | 0.93 | 113.0 |
| QBoost (9/10 trees, D-Wave) | 0.90 | 0.94 | 0.92 | 6.0 |

This third experiment used no PCA. Best classifier was QBoost (9/10 trees, exhaustive), but this took substantially longer than running on a D-Wave quantum annealer.

The performance was assessed using Precision, Recall and F1-Score.

Precision (P) is defined as the number of true positives (Tp) over the sum of the number of true positive (Tp) and false positives (Fp):

$$P = \frac{T_P}{T_p + F_P}$$

The precision is the ability of the trained vision system 250 to not classify as positive an image that is negative.

The recall is defined as the number of true positives over the sum of the number of true positives (TP) and false negatives (FN):

$$R = \frac{T_P}{T_p + F_N}$$

The recall can be understood as the ability of the model to find all the positive samples. Since there tends to be a trade-off between these two metrics of precision and recall, for example in unbalanced datasets, it is also possible to use the F1-Score of the classifiers to provide a more consistent metric. This is defined as the harmonic mean of precision and recall:

$$F1 = 2. \ \frac{P.R}{P + R}$$

**Results**

Using PCA, the dimension of the data to were reduced to 10 (Experiment 1) and 20 (Experiment 2) features (16 for the QSVM since the simulators cannot go higher). The performance compared the performance of the different models.

It can be seen, from the tables, that the quantum models already outperform their classical counterparts by a wide margin.

If PCA is not applied, it is not possible obtain results for the QSVM. The results with a quantum annealer (D-Wave) is close in precision to the one obtained for QBoost with an exhaustive optimization solver. These results are summarized in the third experiment.

The improvement in performance for the QBoost seen in the above results becomes even more impressive when looking at the running times. Not only can QBoost outperform in precision a classical AdaBoost with five times more trees, but also takes roughly the same amount of time as an AdaBoost with the same number of trees.

Remarks

One remark is that the algorithm to be trained, no matter the underlying hardware, may have a number of hyperparameters to tune. In the case for instance of QBoost, one has the value of several Lagrange multipliers, cut-offs for the performance of the weak classifiers, the number of weak classifiers, and more. In the case of a variational quantum classifier, one had the different rotation angles of the qubits, number of epochs, depth of the variational circuit, entanglement structure of the circuit, and more.

In the case of quantum-inspired tensor networks, one has the number of tensors, the structure of the tensor network itself, the bond dimension, the type of training algorithm (variational, imaginary-time evolution, tangent space...), and more.

This fine-tuning is to be performed during the training phase, to maximize the performance of the algorithm for the training dataset while avoiding overfitting.

Reference Numerals

| | |
|---|---|
| 10 | Computing system |
| 20 | Central processing unit |
| 25 | Data storage |
| 30 | Input/output devices |
| 35 | Graphics processing unit |
| 40 | Field programmable gate array |
| 50 | Quantum processor |
| 55 | Input devices |
| 60 | Computer network |
| 200 | System |
| 210 | Training module |
| 215 | Training set of images |
| 220 | Processing module |
| 225 | Raw images |
| 230 | Image pre-processing module. |
| 233 | Contrast enhancement module |
| 237 | Dimension reduction module |
| 240 | Classifier module |
| 250 | Trained vision system |
| 260 | Result |
| 265 | Area |
| 270 | Localised objects |

**Claims**

1. A computer-implemented method of classifying an image (255) comprising:

   - enhancing (S320) contrast of the image (255);
   - applying (S330) dimension reduction to the contrast-image image (255');
   - passing (S340) the enhanced contrast and dimensionally reduced image (255') to a quantum trained vision system (250); and
   - generating (S350) a result from the quantum trained vision system (250).

2. The computer-implemented method of claim 1, wherein the enhancing (S320) of the image comprises one of contrast stretching or histogram equalisation.

3. The computer-implemented method of claim 1 or 2, further comprising splitting (S360) the enhanced contrast and dimensionally reduced image (255') into at least two areas depending on the received result.

4. The computer-implemented method of claim 3, further comprising passing the at least two areas of the enhanced contrast and dimensionally reduced image (255') to the quantum-trained classifier module (240) and receiving (S350) a further result.

5. The computer-implemented method of any of the above claims, wherein the number of dimensions after applying (S330) the dimension reduction is at least ten dimensions.

6. A computer-implemented method of training a classifier module (240) to classify a plurality of images (255) comprising:

   - inputting (S410) a set of training images (S215);
   - annotating (S435) the images in the set of training images with one or more annotations;
   - enhancing (S420) contrast of images from the set of training images; (255);
   - applying (S430) dimension reduction to the contrast-enhanced images (215');
   - passing (S440) the enhanced contrast and dimensionally reduced image (255') and the annotations to a classifier module (240) for training to develop a model; and
   - passing (S450) the model a vision system (250) from the enhanced contrast and dimensionally reduced image (255') and the annotations to a classifier module (240).

7. The computer-implemented method of claim 6, wherein the number of dimensions after applying (S430) the dimension reduction is at least ten dimensions.

8. A system for the classification of images comprising:

   - a central processing unit (20)
   - data storage (25)
   - a plurality of input/output devices (30) for inputting the image;
   - an image pre-processing module (230) adapted to enhance contrast of the image and reduce the dimensions of the image;
   - a quantum-trained vision system (250) for accepting the enhanced contrast and dimensionally reduced image (255') and generating (S440) a result.

9. The system (10) of claim 8, wherein the image processing module (230) is adapted to enhance the contrast of the image by at least one of contrast stretching or histogram equalisation.

10. The system of claim 8 or 9, wherein the image pre-processing module (230) is adapted to reduce the number of dimensions of the image using principal component analysis.

Fig. 1

Fig. 2

- 225 Raw new image
- 220
  - Contrast enhancement
  - 255'
  - Dimensional reduction PCA
- 225" Preprocessed new image
- 200
- 210 Training module
- 215 Raw training images
- 230
  - Contrast enhancement
  - Dimensional reduction PCA
- Preprocessed training images
- Improve preprocessing until best performance
- 240 Quantum/Quantum-Inspired/Hybrid classifier module
- Hyperparameter tuning until best performance
- 250 Trained vision system
- S340
- S350
- S370
- 260 Output Classified image
- 265 Split
- S360
- Select sector with object
- 270 Output Localized object in image

```
┌─────────────────┐      ┌─────────────────┐      ┌─────────────────┐
│                 │      │  S310 Input     │      │  S320 Enhance   │
│   S300 Start    │ ──►  │     images      │ ──►  │    contrast     │
│                 │      │                 │      │                 │
└─────────────────┘      └─────────────────┘      └─────────────────┘
         │
         ▼
┌─────────────────┐      ┌─────────────────┐      ┌─────────────────┐
│  S330 Reduce    │      │  S340 Pass to   │      │  S350 Produce   │
│   dimensions    │ ──►  │     module      │ ──►  │     result      │
│                 │      │                 │      │                 │
└─────────────────┘      └─────────────────┘      └─────────────────┘
         │
         ▼
┌─────────────────┐      ┌─────────────────┐
│  S360 Split     │      │  S370 Repeat    │
│     image       │ ──►  │ classification  │
│                 │      │                 │
└─────────────────┘      └─────────────────┘
```

# Fig. 3

S400 Start → S410 Input training images → S420 Enhance contrast

S430 Reduce Dimensions → S435 Annotation → S440 Train

S450 Pass to software module

# Fig. 4

Europäisches
Patentamt

European
Patent Office

Office européen
des brevets

## EUROPEAN SEARCH REPORT

Application Number

EP 22 38 2707

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LI WEIKANG ET AL: "Recent advances for quantum classifiers", SCIENCE CHINA PHYSICS, MECHANICS, SCIENCE CHINA PRESS, BEIJING, vol. 65, no. 2, 2 December 2021 (2021-12-02), XP037638079, ISSN: 1674-7348, DOI: 10.1007/S11433-021-1793-6 [retrieved on 2021-12-02] * section 2.5.2 section 3.1 * | 1-10 | INV. G06V10/77 G06V10/774 G06N10/60 G06V10/20 |
| X,D | EP 3 674 999 A1 (BULL SAS [FR]) 1 July 2020 (2020-07-01) * paragraphs [0007], [0077]; claim 1 * | 1-10 | |

TECHNICAL FIELDS
SEARCHED      (IPC)

G06V
G06N

The present search report has been drawn up for all claims

| Place of search | Date of completion of the search | Examiner |
|---|---|---|
| The Hague | 3 January 2023 | Nowbakht Irani, Ali |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.............................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 38 2707

This annex lists the patent family members relating to the patent documents cited in the above-mentioned European search report.
The members are as contained in the European Patent Office EDP file on
The European Patent Office is in no way liable for these particulars which are merely given for the purpose of information.

03-01-2023

| Patent document cited in search report | | Publication date | Patent family member(s) | | Publication date |
|---|---|---|---|---|---|
| EP 3674999 | A1 | 01-07-2020 | EP 3674999 | A1 | 01-07-2020 |
| | | | US 2020210755 | A1 | 02-07-2020 |

-------------------------------------------------------------------------------

For more details about this annex : see Official Journal of the European Patent Office, No. 12/82

**EP 4 310 793 A1**

**REFERENCES CITED IN THE DESCRIPTION**

**Patent documents cited in the description**

- EP 3674999 A
- WO 2019238510 A1
- US 2022121998 A1
- US 10977558 B2